# EUROPEAN PATENT APPLICATION

(11) **EP 4 262 001 A1**
(43) Date of publication of application: **18.10.2023**
(21) Application number: 22882565.9
(22) Date of filing: 22.09.2022
(51) Int. Cl.: H01M 50/30, H01M 50/169, H01M 50/103, H01M 50/15

(54) **BATTERY CELL, BATTERY, AND ELECTRIC DEVICE**

(30) Priority: 19.10.2021 CN 202111217337
(71) Applicant: Contemporary Amperex Technology Co., Limited, Ningde, Fujian 352100 (CN)
(72) Inventor: JIN, Chao, Ningde, Fujian 352100 (CN); REN, Miaomiao, Ningde, Fujian 352100 (CN); ZHU, Tianguang, Ningde, Fujian 352100 (CN); DAI, Zhipeng, Ningde, Fujian 352100 (CN); YAN, Guanfusheng, Ningde, Fujian 352100 (CN); ZHAO, Fenggang, Ningde, Fujian 352100 (CN)
(74) Representative: Laufhütte, Dieter
(86) International application number: PCT/CN2022/120609
(87) International publication number: WO 2023/065954

(57) **Abstract**

The present application provides a battery cell, a battery, and an electrical apparatus. The battery cell comprises a case, a cover plate, and a pressure relief apparatus. The case has an opening; the cover plate covers the opening, and the cover plate is welded with the case to form a welding seam; the pressure relief apparatus is disposed on the cover plate, the pressure relief apparatus is provided with a weak region, the weak region is configured to be broken to release internal pressure when the internal pressure or temperature of the battery cell reaches a threshold, and the minimum distance between the edge of the weak region and the welding seam is greater than or equal to 3 mm.

## Description

### Cross-reference

The present application refers to Chinese Patent Application No. 202111217337.4, filed on October 19, 2021 and entitled "BATTERY CELL", which is incorporated herein by reference in its entirety.

### Technical Field

The present application relates to the technical field of batteries, and in particular, to a battery cell, a battery and an electrical apparatus.

### Background

Energy saving and emission reduction is the key to the sustainable development of automobile industry, electric vehicles have become an important part of the sustainable development of automotive industry due to their advantages of energy saving and environmental protection. For electric vehicles, battery technology is an important factor related to their development.

Lithium-ion batteries are high-performance secondary batteries, and have advantages such as high operating voltage, high energy density, small volume, large capacity, long cycle life and memoryless effect, and are widely used in fields such as consumer electronics and power batteries. During the manufacturing process of the battery, the cells are usually sealed within a cell shell and a cover plate which are welded together.

In order to prevent explosion caused by thermal runaway inside the battery, an explosion-proof valve is usually provided on the cover plate when the battery group is produced. When there is a sharp increase in temperature and pressure due to an abnormality in the cell and thermal runaway inside the battery, the gas generated in the cell will break through the scored area of the explosion-proof valve, causing the explosion-proof valve to burst, thereby achieving the purpose of pressure relief. Therefore, when an abnormality occurs in the cell, the internal temperature and pressure rise sharply, how to ensure that the explosion-proof valve bursts and releases pressure in time has become a technical issue of great concern in the field of battery manufacturing.

### Summary of the Invention

The present application is intended to solve at least one of the technical issues existing in the prior art. To this end, an object of the present application is to propose a battery cell, a battery, and an electrical apparatus to improve the safety of the battery.

An embodiment of the first aspect of the present application provides a battery cell, including: a case, a cover plate, and a pressure relief apparatus, where the case has an opening; the cover plate covers the opening, the cover plate being welded with the case to form a welding seam; and the pressure relief device is disposed on the cover plate and provided with a weak region, and the weak region is configured to be broken to release internal pressure when the internal pressure or temperature of the battery cell reaches a threshold, wherein the minimum distance between an edge of the weak region and the welding seam is greater than or equal to 3 mm.

According to the battery cell provided in this embodiment, by setting the edge of the weak region of the pressure relief apparatus to be at least 3 mm away from the welding seam, so that when the cover plate is welded on the case to form the welding seam, the problem of rising the explosion pressure after the welding is completed due to the edge of the weak region being too close to the welding seam can be avoided as much as possible, and the variation amplitude of the explosion pressure of the weak region before and after welding of the cover plate is reduced, in this way, the explosion pressure of the weak region of the pressure relief apparatus of the welded battery cell can maintain the original designed pressure threshold before the assembling as much as possible, ensuring that when an abnormality occurs in the cell and the internal temperature and pressure are sharply increased, the weak region of the pressure relief apparatus is able to burst and release pressure in time when the designed pressure threshold is reached.

In some embodiments, there are a plurality of pressure relief apparatuses. Since the distance between the edge of the weak region disposed on the cover plate and the welding seam is more than 3 mm, the area of the weak region cannot be designed to be larger, the diameter of the pressure relief port after explosion of the weak region is limited, and the pressure relief speed is affected to some extent. Therefore, after providing a plurality of pressure relief apparatus, the number of pressure relief ports is increased, and the deficiency that the diameter of the pressure relief port is not big enough and the pressure relief speed is affected due to the fact that the area of a single weak region cannot be designed to be larger can be made up, and the pressure relief capability is effectively improved.

In some embodiments, at least two pressure relief apparatuses have weak regions with different areas. Different weak regions have different areas, so that after explosion, the diameters of the pressure relief ports of various weak regions are different. In this way, it is possible to design different explosion pressures for weak regions with different areas. When the internal pressure of the battery is gradually increased, one or some of the weak regions with a relatively small explosion pressure burst first to release pressure, and if the internal pressure of the battery cannot be effectively released and continues to rise, one or some of the weak regions with a relatively large explosion pressure will burst to increase the pressure relief capability, in this way, bursting a different number of pressure relief apparatus under different pressure thresholds is realized, thereby achieving a gradient explosion effect.

In some embodiments, the minimum distance between the edge of the weak region of each pressure relief apparatus and the welding seam is the same. The size of the (minimum) distance between the edge of the weak region and the welding seam determines the pressure variation magnitude of the explosion pressure of the weak region before and after welding of the cover plate. The minimum distance between the edge of the weak region of each pressure relief apparatus and the welding seam being the same can ensure that the pressure variation magnitude of the weak region of each pressure relief apparatus tend to be the same under the premise of reducing the influence of the welding seam on the explosion pressure as much as possible, thereby achieving an explosion-proof effect which is close to the designed parameters.

In some embodiments, the minimum distance between the weak regions of any two adjacent pressure relief apparatuses is greater than or equal to 3 mm. By maintaining the minimum distance between the weak regions of adjacent pressure relief apparatus to above 3 mm, the deviation between the actual explosion pressure and the designed threshold due to the distance between weak regions being too close can be avoided as much as possible.

In some embodiments, the battery cell further includes a positive electrode terminal and a negative electrode terminal disposed on the cover plate, and the plurality of pressure relief apparatuses are all located between the positive electrode terminal and the negative electrode terminal. By means of multi-style arrangement, it is possible to flexibly adjust the selection according to actual designed structure of a battery cell, and the layout is more flexible, thereby avoiding the interference problem at the top of the cell.

In some embodiments, the battery cell further includes a liquid injection port disposed on the cover plate and located between the positive electrode terminal and the negative electrode terminal, a plurality of pressure relief apparatus are disposed on both sides of the liquid injection port, respectively.

By disposing the pressure relief apparatus on both sides of the liquid injection port, the positions of various pressure relief apparatus can be dispersed as much as possible, ensuring that the pressure relief apparatus are as far away from other surrounding component structures as possible, so as to avoid deviation between the actual explosion pressure and the designed threshold as much as possible.

In some embodiments, the battery cell further includes a liquid injection port disposed on the cover plate and located between the positive electrode terminal and the negative electrode terminal, a plurality of pressure relief apparatus are disposed on the same side of the liquid injection port.

In some embodiments, there are two pressure relief apparatuses, and the lower limit ratio of explosion pressures of the weak regions of the two pressure relief apparatuses is greater than or equal to 1.2 and less than or equal to 1.5.

In some embodiments, the area size of the weak region of each pressure relief apparatus has a predetermined value, and the area sizes of the weak regions of at least some of the pressure relief apparatuses have a first predetermined value, and the area sizes of the weak regions of at least some of the pressure relief apparatuses have a second predetermined value.

The area size of the weak region of various pressure relief apparatus being designed with a predetermined value, so that the pressure relief apparatus with various area sizes can be selected and combined according to actual pressure relief requirements of different battery products, and further disposed on a cover plate, so that the battery cell has a desired pressure relief capability.

An embodiment of the second aspect of the present application provides a battery, including the battery cell in the foregoing embodiment.

An embodiment of the third aspect of the present application provides an electrical apparatus, including the battery in the foregoing embodiment, and the battery is used to provide electric energy.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

In the drawings, unless otherwise specified, like reference numerals indicate like or similar parts or elements throughout multiple drawings. These drawings are not necessarily drawn to scale. It should be understood that these drawings depict only some embodiments disclosed according to the present application, and should not be regarded as a limitation to the scope of the present application.
Fig. 1 is a schematic structural diagram of a vehicle provided in some embodiments of the present application.
Fig. 2 is an exploded view of a battery provided in some embodiments of the present application.
Fig. 3 is a schematic diagram of a disassembled structure of a battery cell provided in some embodiments of the present application.
Fig. 4 is a schematic side view of a cover plate structure of the battery cell shown in Fig. 3.
Fig. 5 is a graph showing the strength of weak region as a function of distance between the edge thereof and the welding seam.
Fig. 6 is a schematic structural diagram of another cover plate of a battery cell provided in some embodiments of the present application.
Fig. 7 is a schematic structural diagram of a cover plate of a battery cell provided in some embodiments of the present application.
Fig. 8 is a schematic structural diagram of another cover plate of a battery cell provided in some embodiments of the present application.

Description of reference numerals:
vehicle 1000;
battery 1001, controller 1002, motor 1003;
battery cell 100, case 11; cover plate 12; pressure relief apparatus 13; positive electrode terminal 14; negative electrode terminal 15; liquid injection port 16; opening 110; weak region 130;
box body 200, first part 201, second part 202.

### Detailed Description

The following describes in detail embodiments of the technical solutions of the present application with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" simply describes the association relation of the associated objects, indicating that there can be three relations, such as A and/or B, indicating that A exists alone, A and B exist simultaneously, and B exists alone. In addition, the character "/" herein generally means that the associated objects before and after it are in an "or" relationship.

In the description of the embodiments of the present application, the term "a plurality of' refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and defined, the technical terms "mounted", "connected with", "connected", "fixed", and the like should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meanings of the above terms in the embodiments of the present application can be understood according to specific situations.

At present, from the perspective of the development of the market situation, power batteries are more and more widely used. The power battery is not only applied to water, at present, the manufacturing of lithium ion batteries used as consumer electronics or power batteries typically includes the following processes: electrode sheet-making, cell assembling, cell put-in, cover plate encapsulating, drying and liquid injection, formation and capacity grading, etc. After the processes above, the assembled cell is sealed in a cell shell and a cover plate which are welded together.

In order to prevent explosion caused by thermal runaway inside the battery, when a battery group is produced, an explosion-proof valve is usually disposed on the cover plate, and the explosion-proof valve is usually an aluminum sheet with a score formed thereon, and the pressure boundary is greater than the gas pressure generated in a life cycle of the battery, and is less than the strength of the welding seam between the cover plate and the cell shell. When there is a sharp increase in temperature and pressure due to an abnormality in the cell and thermal runaway inside the battery, the gas generated in the cell will break through the scored area of the explosion-proof valve, causing the explosion-proof valve to burst, thereby achieving the purpose of pressure relief. The inventor have noted that, during the related manufacturing process of the battery cell, when a cover plate provided with an explosion-proof valve is welded to a case, the welding seam between the cover plate and the case will significantly increase the explosion pressure in the scored area of the explosion-proof valve, so that after welding the cover plate originally designed to have a predetermined explosion pressure to the case, the explosion pressure is significantly increased, when the temperature and pressure in the battery rise sharply and the pressure rise to the predetermined explosion pressure, the scored area of the explosion-proof valve cannot burst in time, so that there is a risk of battery explosion.

Based on the above considerations, in order to avoid the risk of battery explosion caused by the influence of the welding seam on the explosion pressure, after intensive research, the applicant provides a battery cell, including: a case with an opening; a cover plate covering the opening, the cover plate being welded with the case to form a welding seam; and a pressure relief apparatus, disposed on
the cover plate, the pressure relief apparatus being provided with a weak region, the weak region being configured to be broken to release the internal pressure when the internal pressure or temperature of the battery cell reaches a threshold, wherein the minimum distance between the edge of the weak region and the welding seam is greater than or equal to 3 mm. In this type of battery cell, by setting the edge of the weak region of the pressure relief apparatus to be at least 3 mm away from the welding seam, when the cover plate is welded on
the case to form the welding seam, the problem of rising the explosion pressure after the welding is completed due to the edge of the weak region being too close to the welding seam can be avoid as much as possible, and the variation amplitude of the explosion pressure of the weak region before and after welding of the cover plate is reduced, in this way, the explosion pressure of the weak region of the pressure relief apparatus of the welded battery cell can maintain the original designed pressure threshold before the assembling as much as possible, ensuring that when an abnormality occurs in the cell and the internal temperature and pressure are sharply increased, the weak region of the pressure relief apparatus is able to burst and release pressure in time when the designed pressure threshold is reached.

Embodiments of the present application provide an electrical apparatus that uses a battery as a power supply. The electrical apparatus may be, but is not limited to, a mobile phone, a tablet, a laptop computer, an electric toy, an electric power tool, an electric bottle vehicle, an electric vehicle, a ship, a spacecraft, and the like. The electric toy may include fixed or mobile electric toys, such as game consoles, electric car toys, electric ship toys, electric airplane toys, and the like. The spacecraft may include airplanes, rockets, space shuttles, spaceships, and the like.

For ease of description, the following embodiments are illustrated with an example in which the electrical apparatus according to an embodiment of the present application is a vehicle 1000.

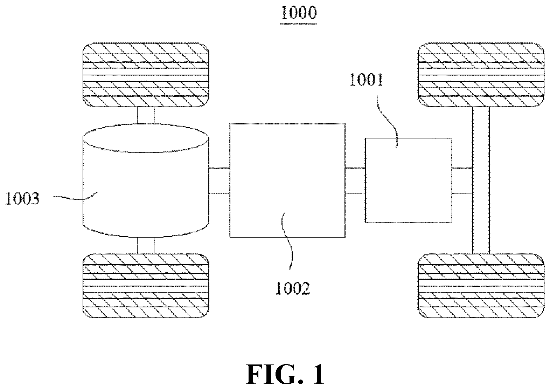

Please refer to Fig. 1, which is a schematic structural diagram of a vehicle 1000 provided in some embodiments of the present application. The vehicle 1000 may be a fuel vehicle, a gas vehicle, or a new-energy vehicle, and the new-energy vehicle may be an all-electric vehicle, a hybrid vehicle, an extended range electric vehicle, or the like. The interior of the vehicle 1000 is provided with a battery 1001, and the battery 1001 may be provided at the bottom or head or tail of the vehicle 1000. The battery 1001 may be used to power the vehicle 1000, for example, the battery 1001 may be used as a power source for the operation of the vehicle 1000. The vehicle 1000 may further include a controller 1002 and a motor 1003, wherein the controller 1002 is used to control the battery 1001 to power the motor 1003, for example, used for meeting the operating power demand when the vehicle 1000 is starting, navigating and driving.

In some embodiments of the present application, the battery 1001 not only may serve as an operating power source of the vehicle 1000, but also may serve as a driving power source of the vehicle 1000, thus replacing or partially replacing fuel or natural gas to provide driving power for the vehicle 1000.

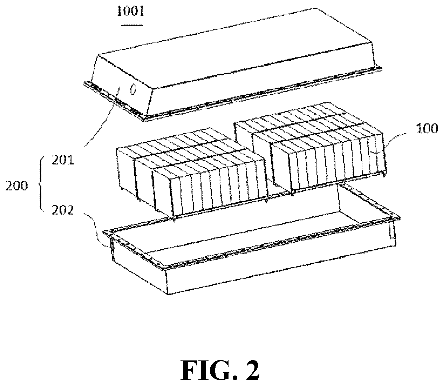

Please refer to Fig. 2, which is an exploded view of a battery 1001 provided in some embodiments of the present application. The battery 1001 includes a box body 200 and a battery cell 100. The battery cell 100 is accommodated in the box body 200. Here, the box body 200 is used to provide an accommodating space for the battery cell 100, and the box body 200 can be of various structures. In some embodiments, the box body 200 may include a first part 201 and a second part 202. The first part 201 and the second part 202 are covered by each other, and the first part 201 and the second part 202 together define an accommodating space for accommodating the battery cell 100. The second part 202 may be a hollow structure with one end open, the first part 201 may be a plate-like structure, and the first part 201 covers the opening side of the second part 202, so that the first part 201 and the second part 202 together define the accommodating space. It is also possible that each of the first part 201 and the second part 202 is a hollow structure with one side open, and the opening side of the first part 201 covers the opening side of the second part 202. Of course, the box body 200 formed by the first part 201 and the second part 202 can be of various shapes, such as a cylinder or a cuboid.

In the battery 1001, there may be a plurality of battery cells 100, and the plurality of battery cells 100 can be connected in series or parallel or in a mixed connection, wherein the mixed connection means that the plurality of battery cells 100 are connected in both series and parallel. The plurality of battery cells 100 may be directly connected in series, in parallel or in a parallel-series manner, and then a whole formed by the plurality of battery cells 100 is accommodated in the box body 200. Of course, the battery 1001 may alternatively be a form in which the plurality of battery cells 100 are connected in series, in parallel or in a parallel-series manner to form a battery module first, and then a plurality of battery modules are connected in series, in parallel or in a parallel-series manner to form a whole to be accommodated in the box body 200. The battery 1001 may further include other structures, for example, the battery 1001 may further include a bus component configured to implement electrical connection between the plurality of battery cells 100.

Each battery cell 100 may be a secondary battery or a primary battery; or may be a lithium-sulfur battery, a sodium-ion battery or a magnesium-ion battery, but is not limited thereto. The battery cell 100 may be in the shape of a cylinder, a flat body, a cuboid or others.

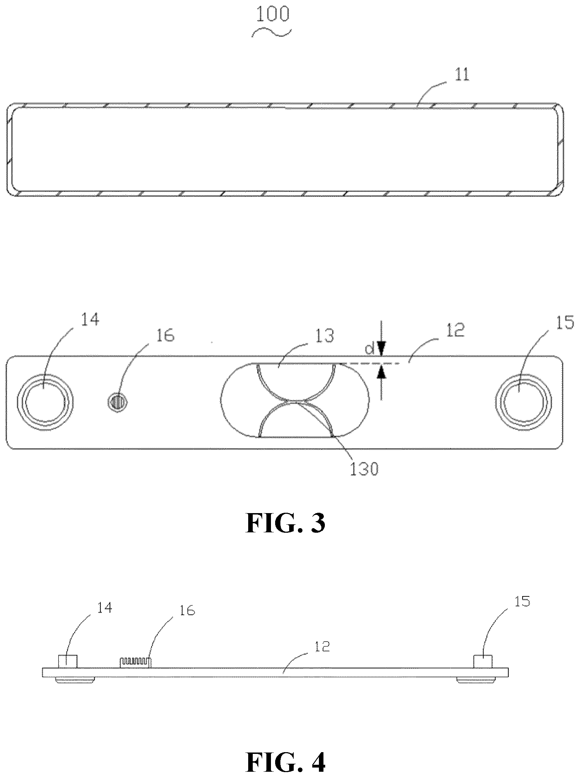

Please refer to Fig. 3 and Fig. 4, Fig. 3 is a schematic diagram of an exploded structure of a battery cell provided in some embodiments of the present application, and Fig. 4 is a schematic side view of a cover plate structure of the battery cell shown in Fig. 3.

According to some embodiments of the present application, the first aspect of the present application provides a battery cell 100, including a case 11, a cover plate 12, and a pressure relief apparatus 13.

The case 11 serves to fix and seal the interior electrochemical system, and the interior thereof is used to dispose cells and electrolyte solution, the case 11 may be, for example, a steel case, an aluminum alloy shell, or the like. In this embodiment, the case 11 has an internal accommodating space for accommodating cells and electrolyte solution, and an opening 110 communicating with the internal accommodating space. During the manufacturing process of the battery, cells are first placed in the accommodation space of the case 11, and then the case 11 is welded and encapsulated with the cover plate 12, followed by process operations such as liquid injection. The shape of the case 11 may be a cylindrical (with a circular cross-section), square cylindrical (with a rectangular cross-section), or other shapes. In this embodiment, the case 11 is in a square cylindrical shape. In some embodiments, during the manufacturing process of the battery cell 100, the material of the case 11 may be steel, aluminum, aluminum plastic film, or the like, which can be determined according to different battery design requirements.

The cover plate 12 is used to cover the opening 110 and welded with the case 11 to form a welding seam, the welding seam surrounds the edge of the cover plate 12 (that is, the outer contour of the cover plate 12) and encloses the edges of the cover plate 12 and the opening 110, so as to seal the cells and the electrolyte solution in the case 11, thereby avoiding moisture intrusion and leakage of the electrolyte solution.

The pressure relief apparatus 13 is disposed on the cover plate 12. The pressure relief apparatus 13 is provided with a weak region 130, the weak region 130 is configured to be broken to release internal pressure when the internal pressure or temperature of the battery cell 100 reaches a threshold, wherein the minimum distance d between the edge of the weak region and the welding seam is greater than or equal to 3 mm. In some embodiments, the pressure relief apparatus 13 is an explosion-proof valve with a substantially runway shape, and the weak region 130 of the surface of the explosion-proof valve is provided with a score, and the pressure boundary of the weak region 130 is greater than the gas pressure generated in a life cycle of the battery cell 100, and is less than the strength of the welding seam between the cover plate 12 and the case 11. In this way, when there is a sharp increase in temperature and pressure due to an abnormality in the cell and thermal runaway inside the case 11, the gas generated in the cell will break through the scored area and cause the explosion-proof valve to burst, thereby achieving the purpose of pressure relief.

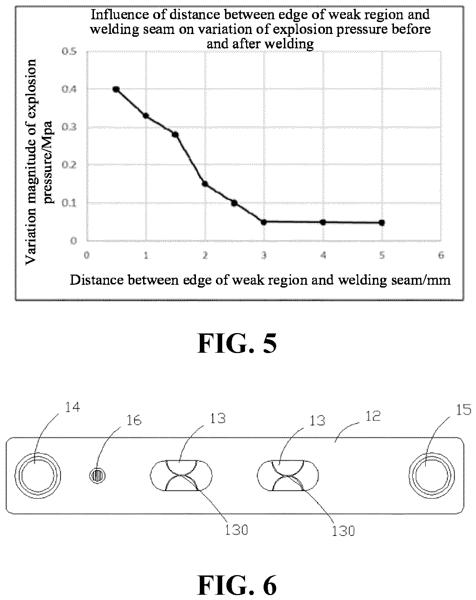

The inventor have found that, in the related manufacturing process of the battery cell, when the cover plate 12 provided with the explosion-proof valve is welded to the case 11, the welding seam between the cover plate 12 and the case 11 will significantly increase the explosion pressure in the scored area of the explosion-proof valve, and when the distance between the welding seam and the scored area is increased, the increasing amplitude of the explosion pressure in the scored area of the explosion-proof valve will be reduced, as shown in the curve in Fig. 5. Therefore, in this embodiment, the edge of the weak region 130 is set to be at least 3 mm away from the welding seam, so that when the cover plate 12 is welded to the case 11, the relatively long distance therebetween enables the influence of the welding seam between the cover plate 12 and the case 11 on the explosion pressure of the weak region 130 to be small, so that the explosion pressure before and after the cover plate 12 is welded to the case 11 is almost unchanged, thereby ensuring consistency of the explosion pressure of the weak region 13 before and after welding. In other words, the explosion pressure of the weak region 130 can maintain the original designed pressure threshold before assembling as much as possible, ensuring that the weak region 130 of the pressure relief apparatus 13 is able to burst and release pressure in time when there is an abnormality in the cell and the internal temperature and pressure of the case 11 are sharply increased.

In an actual production process, for the convenience of procurement, the cover plate 12 of the battery cell 100 generally has a fixed specification, however, in the design concept of the present application, increasing the minimum distance between the edge of the weak region 130 and the welding seam will occupy the area for disposing the pressure relief apparatus 13, so that the area of the weak region 130 cannot be designed to be larger, which affects the pressure relief speed after explosion of the weak region 130 to some extent, and unable to meet higher pressure relief requirements of some large-capacity battery cell.

Therefore, in the embodiment of the present application, referring to Fig. 6, the number of the pressure relief apparatuses 13 may be multiple.

After providing the plurality of pressure relief apparatuses 13, the weak region 130 of each pressure relief apparatus 13 may become a pressure relief port after explosion, in this way, by increasing the number of the pressure relief port, it is possible to make up the deficiency that the diameter of the pressure relief port is not big enough and the pressure relief speed is affected due to the fact that the area of a single weak region 130 cannot be designed to be larger, and effectively improve the pressure relief capability.

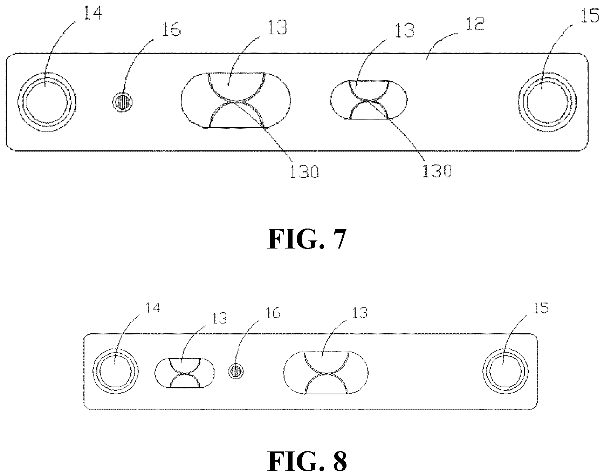

Referring to Fig. 7, another embodiment of the present application provides another type of battery cell, the structure thereof is substantially the same as that of the battery cell 100 provided in the foregoing embodiment, in this embodiment, the difference lies in that the area of the weak region 130 of a plurality of pressure relief apparatus 13 disposed on the cover plate 12 is different.

Since two weak regions 130 have different areas, after explosion, the diameters of the pressure relief ports of various weak regions 130 are different. In this way, it is possible to design different explosion pressures for the two weak regions 130 with different areas. When the internal pressure of the battery cell 100 is gradually increased, one weak region 130 with a relatively small explosion pressure burst first to release pressure, when the internal pressure of the battery cell 100 cannot be effectively released and continuous to rise, the other weak region 130 with a relatively large explosion pressure burst to increase the pressure relief capability, in this way, bursting a different number of pressure relief apparatus under different pressure thresholds is realized, thereby achieving a gradient explosion effect.

It can be understood that, when the number of the weak regions 130 is three or more, it can be arranged as at least two different weak regions 130 have different areas, so that the diameter of the pressure relief port of the weak regions 130 is different. In this way, it is possible to design different explosion pressures for weak regions 130 with different areas. When the internal pressure of the battery cell 100 is gradually increased, one or some of the weak regions 130 with a relatively small explosion pressure burst first to release pressure, and when the internal pressure of the battery cannot be effectively released and continuous to rise, one or some of the weak regions 130 with a relatively large explosion pressure burst to increase the pressure relief capability, in this way, bursting a different number of pressure relief apparatus under different pressure thresholds is realized, thereby achieving a gradient explosion effect.

It should be noted that, when there are a plurality of pressure relief apparatus 13, the minimum distance between the edge of the weak region 130 of each pressure relief apparatus 13 and the welding seam may be designed to be the same.

Through test, it was found that the (minimum) distance between the edge of the weak region 130 and the welding seam determines the pressure variation magnitude of the explosion pressure of the weak region before and after welding of the cover plate 12, the minimum distance between the edge of the weak region of each pressure relief apparatus and the welding seam being the same can ensure that the pressure variation magnitude of the weak region 130 of each pressure relief apparatus 13 tend to be the same under the premise of reducing the influence of the welding seam on the explosion pressure as much as possible, thereby achieving an explosion-proof effect which is close to the designed parameters.

In another implementation of the present application, when there are a plurality of pressure relief apparatus 13, the minimum distance between the weak regions 130 of any two adjacent pressure relief apparatuses 13 is greater than or equal to 3 mm.

By maintaining the minimum distance between the weak regions 130 of adjacent pressure relief apparatus 13 to above 3 mm, the deviation between the actual explosion pressure and the designed threshold due to the distance between weak regions 130 being too close can be avoided as much as possible.

In some embodiments, the battery cell 100 further includes a positive electrode terminal 14 and a negative electrode terminal 15 disposed on the cover plate 12. When there are a plurality of pressure relief apparatus 13, all the plurality of pressure relief apparatuses 13 may be located between the positive electrode terminal 14 and the negative electrode terminal 15. It can be understood that, in other embodiments, it is also possible to dispose at least some of the pressure relief apparatuses 13 on the other side that is opposite to the positive electrode terminal 14, while the negative electrode terminal 15 is disposed between the positive electrode terminal 14 and at least some of the pressure relief apparatuses 13. In other words, the positive electrode terminal 14, at least one pressure relief apparatus 13, the negative electrode terminal 15, and at least one pressure relief apparatus 13 are respectively disposed from one side to the other side of the cover plate 12. Thus, at least one pressure relief apparatus 13 is disposed on each side of the negative electrode terminal 15. In some embodiments, the areas of the weak regions 130 of the pressure relief apparatuses 13 located on both sides of the negative electrode terminal 15 may be different. For example, when there are two pressure relief apparatuses 13, the area of the weak region 130 of one pressure relief apparatus 13 which is close to the positive electrode terminal 14 (i.e., the pressure relief apparatus 13 located between the positive electrode terminal 14 and the negative electrode terminal 15) is large, and the area of the weak region 130 of the other pressure relief apparatus 13 which is far away from the positive electrode terminal 14 is small. Of course, it can be understood that, in another modified implementation, it is also possible that the area of the weak region 130 of one pressure relief apparatus 13 which is close to the positive electrode terminal 14 (i.e., the pressure relief apparatus 13 located between the positive electrode terminal 14 and the negative electrode terminal 15) is small, and the area of the weak region 130 of the other pressure relief apparatus 13 which is far away from the positive electrode terminal 14 is large.

By means of the multi-style arrangement, it is possible to flexibly adjust the selection according to actual designed structure of a battery cell, and the layout is also flexible, thereby avoiding the interference problem at the top of the cell.

In some embodiments, the battery cell 100 further includes a liquid injection port 16 disposed on the cover plate 12 and located between the positive electrode terminal 14 and the negative electrode terminal 15. As shown in Fig. 7, each pressure relief apparatus 13 is located on the same side of the liquid injection port 16.

In some embodiments, as shown in Fig. 8, a plurality of pressure relief apparatus 13 may be disposed on both sides of the liquid injection port 16, respectively. By disposing the pressure relief apparatus 13 on both sides of the liquid injection port 16, the positions of various pressure relief apparatus 13 can be dispersed as much as possible, ensuring that the pressure relief apparatus 13 are as far away from other surrounding component structures as possible, so as to avoid deviation between the actual explosion pressure and the designed threshold as much as possible.

In some embodiments, the lower limit ratio of explosion pressures of the weak regions 130 of the two pressure relief apparatuses 13 is greater than or equal to 1.2 and less than or equal to 1.5.

By setting the lower limit of explosion pressures of the weak regions 130 of the two pressure relief apparatuses 13, the explosion pressure value of the pressure relief apparatus can be controlled more accurately, thereby improving the safety of the battery.

It should be noted that, during the production of the components of the battery cell 100, the area size of the weak region 130 of each pressure relief apparatus 13 may have a predetermined value, wherein the area sizes of the weak regions 130 of at least some of the pressure relief apparatuses 13 have a first predetermined value, and the area sizes of the weak regions 130 of at least some of the pressure relief apparatuses 13 have a second predetermined value.

The area size of the weak region 130 of various pressure relief apparatus 13 being designed with a predetermined value, so that the pressure relief apparatus 13 with various area sizes can be selected and combined according to actual pressure relief requirements of different battery products, and further disposed on the cover plate 12 so that the battery cells 100 has a desired pressure relief capability. In this way, development costs can be effectively reduced by combining pressure relief apparatus with different specifications to meet pressure relief requirements of different battery products.

An embodiment of the second aspect of the present application further provides a battery, including the battery cell in the foregoing embodiment.

An embodiment of the third aspect of the present application further provides an electrical apparatus, including the battery in the foregoing embodiment, and the battery is used to provide electric energy.

In some embodiments, as shown in Figs. 3 and 6, the battery cell 100 includes a case 11, a cover plate 12, a pressure relief apparatus 13, a positive electrode terminal 14, a negative electrode terminal 15, and a liquid injection port 16.

The case 11 has an internal accommodating space for accommodating cells and electrolyte solution, and an opening 110 communicating with the internal accommodating space, the case 11 is in a square cylindrical shape. The cover plate 12 is used to cover the opening 110, and is weld with the case 11 and forms a welding seam, the welding seam surrounds the edge of the cover plate 12 (i.e., the outer contour of the cover plate 12) and encloses the edges of the cover plate 12 and the opening 110. The pressure relief apparatus 13 is disposed on the cover plate 12.

The positive electrode terminal 14 and the negative electrode terminal 15 are disposed on the cover plate 12, and the pressure relief apparatus 13 is located between the positive electrode terminal 14 and the negative electrode terminal 15. There are two pressure relief apparatuses 13, each pressure relief apparatus 13 is provided with a weak region 130, the weak region 130 is configured to be broken to release internal pressure when the internal pressure or temperature of the battery cell 100 reaches a threshold, wherein the minimum distance d between an edge of the weak region and the welding seam is greater than or equal to 3 mm.

The liquid injection port 16 is disposed on the cover plate 12 and is located between the positive electrode terminal 14 and the pressure relief apparatus 13, and is used to inject electrolyte solution into the case 11 which is sealed by the cover plate 12. In a direction from one side to the other side of the cover plate 12, the positive electrode terminal 14, the liquid injection port 16, the two pressure relief apparatuses 13 and the negative electrode terminal 15 are sequentially arranged. The long axis direction of the runway shaped pressure relief apparatus 13 is consistent with this arrangement direction. However, it may be understood that, as long as ensuring the edge of the weak region 130 to be at least 3 mm away from the welding seam, the long axis direction of the runway shaped pressure relief apparatus 13 may also be in other direction, for example, the long axis direction of the runway shaped pressure relief apparatus 13 is perpendicular to the arrangement direction, etc. Of course, when the number of the pressure relief apparatus 13 is single, the long-axis direction thereof can also be flexibly adjusted under the premise of ensuring that the edge of the weak region 130 is at least 3 mm away from the welding seam. Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in various embodiments may be combined in any manner as long as there is no structural conflict. The present application is not limited to the specific embodiments disclosed herein, but rather includes all technical solutions falling within the scope of the claims.

## Claims

1. A battery cell, comprising:
a case with an opening;
a cover plate covering the opening, the cover plate being welded with the case to form a welding seam; and
a pressure relief apparatus disposed on the cover plate, the pressure relief apparatus being provided with a weak region, the weak region being configured to be broken and release internal pressure when the internal pressure or temperature of the battery cell reaches a threshold,
wherein a minimum distance between an edge of the weak region and the welding seam is greater than or equal to 3 mm.

2. The battery cell according to claim 1, wherein a plurality of pressure relief apparatuses are comprised in the battery cell.

3. The battery cell according to claim 2, wherein at least two of the pressure relief apparatuses have weak regions with different areas.

4. The battery cell according to claim 2, wherein the minimum distance between the edge of the weak region of each pressure relief apparatus and the welding seam is the same.

5. The battery cell according to claim 2, wherein the minimum distance between the weak regions of any two adjacent pressure relief apparatuses is greater than or equal to 3 mm.

6. The battery cell according to claim 2, further comprising a positive electrode terminal and a negative electrode terminal disposed on the cover plate, wherein the plurality of pressure relief apparatuses are all located between the positive electrode terminal and the negative electrode terminal.

7. The battery cell according to claim 6, further comprising a liquid injection port disposed on the cover plate and located between the positive electrode terminal and the negative electrode terminal, wherein the plurality of pressure relief apparatuses are respectively disposed on both sides of the liquid injection port.

8. The battery cell according to claim 6, further comprising a liquid injection port disposed on the cover plate and located between the positive electrode terminal and the negative electrode terminal, wherein the plurality of pressure relief apparatuses are disposed on the same side of the liquid injection port.

9. The battery cell according to any one of claims 2 to 8, wherein the battery cell comprises two pressure relief apparatuses, and a lower limit ratio of explosion pressures of the weak regions of the two pressure relief apparatuses is greater than or equal to 1.2 and less than or equal to 1.5.

10. The battery cell according to any one of claims 2 to 8, wherein the area size of the weak region of each of the pressure relief apparatuses has a predetermined value, the area sizes of the weak regions of at least some of the pressure relief apparatuses have a first predetermined value, and the area sizes of the weak regions of at least some of the pressure relief apparatuses have a second predetermined value.

11. A battery, comprising the battery cell according to any one of claims 1 to 10.

12. An electrical apparatus, wherein the electrical apparatus comprises the battery according to claim 11, the battery being used to provide electric energy.
